(19) Europäisches Patentamt
European Patent Office
Office européen des brevets

(11) **EP 0 961 542 B1**

(12) **EUROPÄISCHE PATENTSCHRIFT**

(45) Veröffentlichungstag und Bekanntmachung des Hinweises auf die Patenterteilung:
**31.10.2001   Patentblatt 2001/44**

(21) Anmeldenummer: **97953893.1**

(22) Anmeldetag: **19.12.1997**

(51) Int Cl.$^7$: **A01K 1/015**, B01J 20/24

(86) Internationale Anmeldenummer:
**PCT/EP97/07208**

(87) Internationale Veröffentlichungsnummer:
**WO 98/26650 (25.06.1998 Gazette 1998/25)**

(54) **VERFAHREN ZUR HERSTELLUNG VON SORPTIONSMITTELN AUF DER BASIS VON CELLULOSEHALTIGEM MATERIAL UND TONMINERALIEN**

METHOD FOR PRODUCING SORBENTS ON THE BASIS OF A CELLULOSE-CONTAINING MATERIAL AND CLAY MINERALS

PROCEDE DE PRODUCTION D'AGENTS DE SORPTION A BASE D'UN MATERIAU CONTENANT DE LA CELLULOSE ET DES MINERAUX D'ARGILES REFRACTAIRES

(84) Benannte Vertragsstaaten:
**AT DE ES FR GB IT NL**

(30) Priorität: **19.12.1996   DE 19653152**

(43) Veröffentlichungstag der Anmeldung:
**08.12.1999   Patentblatt 1999/49**

(73) Patentinhaber: **SÜD-CHEMIE AG**
**80333 München (DE)**

(72) Erfinder:
 • **HUBER, Werner**
 **D-85368 Moosburg (DE)**
 • **SELLMAYR, Petra**
 **D-85456 Wartenberg (DE)**
 • **HAUBENSAK, Otto**
 **D-83098 Brannenburg (DE)**

(74) Vertreter: **Reitzner, Bruno, Dr.**
**Splanemann Reitzner**
**Baronetzky Westendorp**
**Patentanwälte**
**Rumfordstrasse 7**
**80469 München (DE)**

(56) Entgegenhaltungen:
**EP-A- 0 351 473**          **DE-A- 4 311 488**
**DE-A- 4 341 923**          **US-A- 4 458 629**
**US-A- 5 062 954**          **US-A- 5 188 064**
**US-A- 5 452 684**

**Beschreibung**

Die Erfindung betrifft ein Verfahren zur Herstellung von Sorptionsmitteln auf der Basis von cellulosehaltigem Material und mindestens einem smektitischem Tonmineral zur Aufnahme von Flüssigkeiten. Diese Sorptionsmittel sind zur Aufnahme beliebiger Flüssigkeiten geeignet; sie eignen sich insbesondere als Streumittel für Heimtiere, weshalb sich die nachfolgenden Ausführungen auf dieses Anwendungsgebiet beziehen.

Besonders in städtischer Umgebung ist die Heimtierhaltung in zunehmendem Maße mit der Verwendung von Streumaterialien verbunden. Diese haben die Aufgabe, die von den Tieren abgegebenen Flüssigkeiten aufzusaugen. Sie sollten ferner den halbfesten, feuchten tierischen Exkrementen und Ausscheidungen Feuchtigkeit entziehen, um damit die Geruchsentwicklung zu vermindern. Gute Streumaterialien sollen weiterhin die abgegebenen oder entzogenen Flüssigkeiten unter Bildung eines kompakten Klumpens aufnehmen, der in einfacher und sparsamer Weise entfernt werden kann. Eine optimale Tierstreu soll somit ein hohes Saugvermögen haben und die von den Tieren abgegebenen Flüssigkeiten vollständig innerhalb der Schüttung absorbieren, ohne daß der Boden des Streubehälters benetzt wird.

Die auf dem Markt anzutreffenden Streumaterialen sind einmal organische Substanzen, wie Stroh, Sägemehl, Holzspäne, Rinden, geschreddertes Papier, Cellulosefasern, landwirtschaftliche Reststoffe usw.; diese werden allein oder in Mischungen mit anorganischen Materialien eingesetzt. Der Nachteil der organischen Streumaterialien ist die oftmals nicht vorhandene oder nicht zufriedenstellende Klumpenbildung bzw. ihre Konsistenz sowie ihre Neigung zur bakteriellen Zersetzung, insbesondere im Zusammenwirken mit Feuchtigkeit.

Aus der US-A-5 000 115 ist ein Sorptionsmittel, insbesondere ein Streumittel für Heimtiere auf der Basis von quellfähigen smektitischen Tonmineralen bekannt, welches zusätzlich noch Sand oder cellulosehaltige Materialien, wie Holzschnipsel oder -späne und zerkleinertes Papier enthalten kann. Dabei werden die Bestandteile ohne Verdichtung trocken miteinander vermischt.

Aus der US-A-4 341 180 ist ein Verfahren zur Herstellung von Streumaterialien für Heimtiere bekannt, wonach wasserhaltige Altpapierrückstände bis auf einen Wassergehalt von etwa 32 bis 40% entwässert, nach Zusatz von Natriumbicarbonat als Deodorans gepreßt, pelletiert und getrocknet werden. Die Papierrückstände können etwa 10 bis 50% der üblichen PapierFüllstoffe, wie Kaolin, enthalten. Die beschriebenen Füllstoffe sind nicht quellfähig, weshalb die Streumaterialien bei der Aufnahme von Flüssigkeiten keine Klumpen bilden.

Aus der DE-A-41 01 243 ist eine Tierstreu und ein Verfahren zu ihrer Herstellung bekannt, wonach Cellulose, Cellulosederivate und/oder cellulosehaltige Materialien landwirtschaftlicher oder industrieller Herkunft sowie Holzabfälle, wie Sägemehl, mit einer Partikelgröße von bis zu 1 mm mit Beschwerungsmitteln und Verdickungsmitteln, wie Bentonit, in Anwesenheit von Wasser vermischt bzw. gerührt werden, das Gemisch ohne Kompaktierung bis auf einen Restwassergehalt von nicht mehr als 10 Gew.-% entwässert wird und der verbleibende Rückstand auf eine Teilchengröße oberhalb von 1 mm zerkleinert wird. Das Beschwerungsmittel wird in einer solchen Menge zugesetzt, daß die Schüttdichte der Tierstreu nach dem Trocknen oberhalb von etwa 500 kg/m$^3$ liegt. Als vorteilhaft wird das gegenüber den organischen Streumaterialien höhere Schüttgewicht angegeben.

Aus der DE-A-38 16 225 ist ein Streumaterial auf der Basis von zellstoffhaltigem Material als Naßsubstanz und einem kapillarfähigen, kleinkörnigen Stoff, wie Kalksteinmehl, Holzmehl, Tonmehl, Bentonit, oder Bimssteinmehl, bekannt. Vorzugsweise wird Papierfangstoff als Naßsubstanz mit einem Feuchtegehalt von 50 bis 60% und Bimssteinmehl mit einem Feuchtegehalt von <30% gemischt und anschließend getrocknet. Bei Verwendung eines Gemisches aus Holzmehl und Cellulosefasern erfolgt eine Kompaktierung in einem Schneckenkompaktierer. Die Kompaktierung unterbleibt jedoch bei Verwendung von anorganischen kapillarfähigen Stoffen. Das Streumaterial ist bröselig und hat einen hohen Anteil an staubfeinem Material. Es bildet bei Zusatz von Flüssigkeiten keine Klumpen.

Aus der DE-A-4 338 362 ist ein Verfahren zur Herstellung von Sorptionsmitteln auf Smektitbasis zur Aufnahme von Flüssigkeiten bekannt, wobei (a) ein Smektit mit einem Wassergehalt von weniger als 6 Gew.-%; (b) eine bei der Aufbereitung von Abwässern der Papierherstellung anfallende Masse aus faserförmiger Cellulose und anorganischen Pigmenten; und (c) wasserfreies Calciumsulfat oder Calciumsulfat-Hemihydrat miteinander vermischt, kompaktiert und gebrochen werden; das Mengenverhältnis zwischen (a), (b) und (c) wird so gewählt, daß der Wassergehalt des körnigen Materials weniger als 20 Gew.-% beträgt. Beim Kompaktieren entstehen Stücke mit einer breiten Korngrößenverteilung, die anschließend gebrochen werden, wobei ein verhältnismäßig hoher Anteil an staubfeinem Material anfällt.

Aus der EP-B-0 663 793 (DE-A-43 27 159) ist ein Verfahren zur Herstellung von Sorptionsmitteln auf der Basis von Spektiten und cellulosehaltigen Materialien mit niedrigem Schüttgewicht bekannt, wobei eine feuchte Mischung aus Smektit und zerkleinertem Holzmaterial oder einem anderen cellulosehaltigen Material pflanzlichen Ursprungs, d.h. cellulosehaltiger Primärrohstoff, unter inniger Scherwirkung mit nachfolgender Extrusion behandelt und anschließend getrocknet und granuliert wird. Bei der Granulierung entsteht ein verhältnismäßig hoher Anteil an feinteiligem Material.

In der US-A-5,456,284 ist ein Verfahren zur Herstellung einer klumpenbildenden Tierstreu offenbart, wobei ein smektitischer Ton vor oder nach der Extrusion mit einem geringen Prozentsatz eines wasserlöslichen Klebstoffs bzw. Bindemittels, beispielsweise von CMC, vermischt wird.

Aus der EP-A-0 087 001 sind Sorptionsmittel auf der Basis von Tonmineralteilchen mit einer Teilchengröße von 710 μm bis 4 mm bekannt, die verdichtete Massen aus Teilchen von < 2 mm darstellen. Die Tonmineralteilchen sind durch wasserlösliche oder in Wasser dispergierebare Substanzen, z.B. Cellulosederivate, wie Carboxymethylcellulose, oder Stärke, miteinander verbunden. Die Verwendung von in Wasser nicht quellbarem cellulosehaltigem Material ist nicht beschrieben.

Schließlich ist aus der DE-A-43 11 488 (EP-A-0 619 140) ein Verfahren zur Herstellung von Sorptionsmitteln auf der Basis von Cellulosefasern, zerkleinertem Holzmaterial und Tonmineralien bekannt, wobei ein feinteiliges cellulosehaltiges Material mit einer durchschnittlichen Faserlänge von 0,4 bis 3 mm und einer Restfeuchte von 5 bis 15 Gew.-% und/oder ein zerkleinertes Holzmaterial mit einer durchschnittlichen Faserlänge von 0,05 bis 2,0 mm und einer Restfeuchte von 10 bis 20 Gew.-%; und ein smektitisches Tonmineral in feinteiliger Form mit einer durchschnittlichen Partikelgröße von 0,1 bis 1,0 mm, einer Restfeuchte von 5 bis 15 Gew.-% und einem Smektitgehalt von mindestens 50 Gew.-% homogen vermischt, und die verdichtete Mischung zerkleinert wird. Die Verdichtung erfolgt mit Hilfe von Preßwalzen (Brikettierwalzen oder Preßgranulierwalzen). Bei der Zerkleinerung entsteht ein verhältnismäßig hoher Anteil an feinteiligem Material.

Gegenüber dem vorstehend beschriebenen Stand der Technik wurde nun gefunden, daß die Eigenschaften von Sorptionsmitteln, insbesondere von Streumaterialien, erheblich verbessert werden können, wenn die Bestandteile, im wesentlichen smektitische(s) Tonmineral(ien) und feinteilige cellulosehaltige Materialien bei einem genau eingestellten Wassergehalt unter hohem Druck verdichtet werden, wobei dafür Sorge getragen wird, daß der Anteil an feinteiligem Material möglichst niedrig gehalten wird.

Die Erfindung betrifft somit ein Verfahren zur Herstellung von Sorptionsmitteln auf der Basis von cellulosehaltigem Material und mindestens einem quellfähigen smektitischen Tonmineral, die bei Aufnahme von Flüssigkeiten Klumpen bilden; das Verfahren ist dadurch gekennzeichnet, daß man

(a) das cellulosehaltige Material und das smektitische Tonmineral in feinteiliger Form innig miteinander vermischt, wobei der Gesamtwassergehalt der zu vermischenden Bestandteile zwischen etwa 25 und 40 Gew.-% liegt oder durch Zugabe von Wasser auf diesen Bereich eingestellt wird,

(b) die Mischung unter Verwendung einer Matrizenpresse verdichtet und

(c) die verdichteten, aus der Matrizenpresse austretenden Formkörper im wesentlichen quer zur Austrittsrichtung zertrennt und anschließend trocknet.

Unter "cellulosehaltigem Material" versteht man erfindungsgemäß ein Material, da im Gegensatz zu den in der EP-A-0 087 001 beschriebenen Cellulosederivaten in Wasser praktisch nicht quillt und somit auch keine Bindemitteleigenschaften hat.

Die nach dem erfindungsgemäßen Verfahren hergestellten Sorptionsmittel sind verhältnismäßig leicht, so daß sie von den Konsumenten besser transportiert und gehandhabt werden können. Beispielsweise kann eine Katzentoilette leicht gefüllt und entleert werden. Weiterhin weisen die so hergestellten Sorptionsmittel eine hervorragende Klumpenbildung auf, wobei die zu entsorgenden Klumpen ein reduziertes Gewicht haben; sie stauben nicht und haben ein ausgezeichnetes Absorptionsvermögen. Ohne an diese Theorie gebunden zu sein wird vermutet, daß die vorteilhaften Eigenschaften zumindest teilweise auf eine besonders innige Verbindung zwischen dem cellulosehaltigen Material und dem smektitischen Tonmineral zurückzuführen sind.

Um die erfindungsgemäßen Vorteile zu erzielen, ist es wichtig, daß der Wassergehalt der Mischung in einem sehr engen Bereich zwischen etwa 25 und 40 Gew.-%, insbesondere zwischen etwa 28 und 35 Gew.-% liegt. Liegt der Wassergehalt außerhalb dieses Bereichs, verschlechtern sich die Eigenschaften des erhaltenen Sorptionsmittels, und es werden beispielsweise ein höheres Schüttgewicht, schlechtere Absorptionseigenschaften oder eine verschlechterte Klumpenbildung erzielt.

So wird bespielsweise im Vergleich zu dem Verdichten bei geringem Wassergehalt bei dem erfindungsgemäßen Wassergehalt eine zu starke Kompaktierung während des Preßformens verhindert, da das Wasser kaum komprimierbar ist. Somit können vorteilhafte geringe Schüttgewichte erzielt werden.

Weiterhin kann sich beim anschließenden Trocknen der Zusammensetzung, vorzugsweise auf einen Restwassergehalt von etwa 5 bis 15 Gew.-%, eine gewisse Porosität ausbilden, da durch das Verdampfen des Wassers und das Schrumpfen der cellulosehaltigen Materialien, z.B. der Holzfasern, während des Trocknens Hohlräume entstehen. Daraus ergibt sich nicht nur der Vorteil eines niedrigen Schüttgewichts, sondern die Hohlräume stehen anschließend auch zur Absorption von Flüssigkeiten und Gasen zur Verfügung, so daß die Absorptionseigenschaften des Sorptionsmittels verbessert werden. Schließlich können die in den kleinen Hohlräumen auftretenden Kapillareffekte zu einer schnelleren Absorption von Flüssigkeit führen.

Der erfindungsgemäß wesentliche Wassergehalt der Mischung beim Preßformen kann entweder bereits in den einzelnen eingesetzten Komponenten, wie dem cellulosehaltigen Material und dem (den) smektitischen Tonmineral (ien) vorliegen, oder vor dem Preßformen eingestellt werden, vorzugsweise durch Zugabe von Wasser oder wässrigen Lösungen. Entsprechend wird nach der zweiten Variante zu der trockenen Mischung, die das cellulosehaltige Material und das (die) smektitischen Tonmineral(ien) mit einem Gesamtwassergehalt von weniger als etwa 25 Gew.-% enthält, Wasser zugegeben, bis der Gesamtwassergehalt zwischen etwa 25 und 40, insbesondere zwischen etwa 28 und 35 Gew.-% liegt. Bei der ersten Variante wird nicht von einer trockenen Mischung, sondern von feuchten Ausgangsmaterialien ausgegangen, so daß sich eine Zugabe von Wasser vor dem Preßformen. erübrigt.

Es hat sich überraschenderweise herausgestellt, daß beim Preßformen mit dem genannten Wassergehalt ein besonders günstiger Energieeintrag in die Mischung erfolgt. Es kommt wahrscheinlich zu einer Verschiebung der Schichten des smektitischen Tonminerals (Delamellierung), wobei das Wasser während des Preßformens als vermittelndes Element bei der Ausbildung der innigen Verbindung dient. Dadurch ergeben sich vorteilhafte Eigenschaften des fertigen Sorptionsmittels, wie eine verbesserte Klumpenbildung und eine veringerte Staubentwicklung. Weiterhin kann dadurch mehr leichtes cellulosehaltiges Material eingebracht werden, so daß ohne Verlust der vorstehend genannten positiven Eigenschaften ein besonders niedriges Schüttgewicht erzielt werden kann.

Erfindungsgemäß wird die Mischung aus cellulosehaltigem Material und smektitischem Tonmineral unter Verwendung einer Matrizenpresse verdichtet. Hierbei unterscheidet man zwischen Flachmatrizenpressen und Zylindermatrizenpressen.

Eine Flachmatrizenpresse stellt im wesentlichen ein zylindrisches Gefäß mit einer ebenen, gelochten Bodenplatte dar, gegen die eine oder mehrere umlaufende Walzen drücken. Vorzugsweise sind über der Bodenplatte zwei Walzen angeordnet, die sich einmal um eine Achse in der Mitte des zylindrischen Gefäßes und zum anderen um eine senkrecht dazu stehende Achse in der Art eines Kollerganges drehen. Die feuchte Mischung aus cellulosehaltigem Material und smektitischem Tonmineral wird einmal in dem Spalt zwischen der gelochten Bodenplatte und der (den) umlaufenden Walze(n) und zum anderen beim Durchtritt durch die Öffnungen der gelochten Bodenplatte verdichtet.

Eine Zylindermatrizenpresse enthält statt der ebenen gelochten Bodenplatte einen gelochten Außenzylinder, in welchem sich mindestens eine Walze befindet, die sich um ihre Achse und/oder die Achse des Außenzylinders dreht und die gegen die Innenwand des Außenzylinders drückt. Die feuchte Mischung aus cellulosehaltigem Material und smektitischem Tonmineral wird einmal in dem Spalt zwischen dem gelochten Außenzylinder und der (den) drehbaren Walze(n) und zum anderen beim Durchtritt durch die Öffnungen des Außenzylinders verdichtet. Bei einer anderen Ausführungsform der Zylindermatrizenpresse dreht sich der gelochte Außenzylinder, während die Walze(n) im Inneren des Außenzylinders stationär ist (sind).

Sowohl mit den Flachmatrizenpressen als auch mit den Zylindermatrizenpressen erhält man längliche Formkörper, die nach der Form der Öffnungen in der ebenen Bodenplatte bzw. im Außenzylinder entweder zylindrisch oder polygonal sind. Die länglichen Formkörper werden im wesentlichen quer zur Austrittsrichtung zertrennt, was z.B. mit Hilfe eines messerartigen Abstreifers, der unterhalb der gelochten Bodenplatte bzw. an der Außenwand des gelochten Zylinders angeordnet ist, geschehen kann. Auf diese Weise ist es nicht erforderlich, die Formkörper nach dem Trocknen in einem gesonderten Verfahrensschritt zu brechen, wodurch der Prozentsatz der Feinanteile, insbesondere der staubförmigen Anteile, vermindert werden kann.

Sollten diese dennoch in einem geringen Ausmaß entstehen, werden die zerkleinerten und getrockneten Formkörper von ihnen befreit (z.B. durch Absieben), und die abgetrennten Feinanteile werden gegebenenfalls in die Mischstufe zurückgeleitet.

Der Energieeintrag während des Preßgranulierens sollte allgemein zwischen etwa 3 und 9 kWh/to, insbesondere zwischen etwa 5 und 7 kWh/to liegen.

Die Verwendung eines quellfähigen smektitischen Tonminerals ist von Bedeutung, um die erfindungsgemäßen Vorteile in vollem Umfang zu erzielen, da nicht quellfähige Tonmineralien, wie Kaolin, eine geringe Wasseraufnahmefähigkeit haben und keine Klumpenbildung erfolgt. Als smektitische Tonminerale können beispielweise quellfähige Mineralien der Montmorillonit-Gruppe, wie Bentonit, aber auch Hectorit, Glauconit, Sauconit, Illit oder dergleichen verwendet werden. Es können auch Gemische verschiedener Tonmineralien eingesetzt werden.

Nach einer bevorzugten Ausführungsform geht man von einem Ca- und/oder Na-Smektit, insbesondere von einem Ca- und/oder Na-Bentonit mit einer Wasseraufnahmefähigkeit (bezogen auf das Trockengewicht) von mindestens etwa 60%, vorzugsweise von mindestens etwa 120%, insbesondere von etwa 120 bis 300% und einem Smektitgehalt von etwa 50 bis 95 Gew.-% aus. Neben dem Smektit kann das smektitische Tonmineral andere Begleitmineralien, wie Glimmer, Feldspat und Quarz enthalten.

Nach einer weiteren bevorzugten Ausführungsform wird eine Mischung von Calcium- und Natriumbentonit verwendet, da sich durch das Zusammenwirken dieser Komponenten besonders vorteilhafte Eigenschaften des Sorptionsmittels einstellen. Eine solche Mischung kann aus Calciumbentonit und natürlichem Natriumbentonit hergestellt werden; es ist aber auch möglich, Calciumbentonit durch Aktivierung mit Alkali (z.B. Natriumcarbonat oder andere Natriumsalze) teilweise in Natriumbentonit umzuwandeln, wobei eine sehr innige Mischung erhalten wird. Der Calciumbentonit hat eine besonders schnelle Wasserabsorption, wohingegen Natriumbentonit eine besonders hohe, jedoch für sich genommen langsamere Absorption hat, aber die Klumpenfestigkeit verbessert. Vorzugsweise beträgt das Gewichtsverhältnis zwischen Calcium- und Natrium-Bentonit etwa 2,5:7,5 bis 7,5:2,5. Das Zusammenwirken dieser beiden Komponenten wird durch die erfindungsgemäße Verarbeitung und die innige Verbindung mit dem cellulosehaltigen Material noch gefördert.

Vorzugsweise liegen die Gewichtsverhältnisse zwischen dem feinteiligen cellulosehaltigen Material und dem smektitischen Tonmineral zwischen etwa 1:9 und 6,5:3,5, insbesondere zwischen etwa 3:7 und 6:4. Obwohl je nach den bestimmten verwendeten cellulosehaltigen Materialien und Tonmineralien in Einzelfällen auch davon abweichende Gewichtsverhältnisse vorteilhaft sein können, wird in den genannten Bereichen eine ausgezeichnete Klumpenbildung erreicht.

Vorzugsweise verwendet man als cellulosehaltiges Material einen feingemahlenen Zellstoff (native Cellulose) und/oder einen Sekundärfasern enthaltenden Cellulose-Stoff (z.B.

Papierfasern), mit einer durchschnittlichen Faserlänge von etwa 0,1 bis 2 mm, vorzugsweise von etwa 0,3 bis 0,8 mm. Besonders bevorzugt verwendet man Holzmehl und/oder einen zerkleinerten Holzschliff enthaltenden Stoff mit einer durchschnittlichen Partikelgröße von etwa 0,1 bis 2 mm, vorzugsweise von etwa 0,1 bis 1,0 mm. Ein solches Material hat wegen seines Harzgehaltes einen angenemen Eigengeruch. Es können ferner Mischungen aus feinteiligem Cellulosefasern enthaltendem Material und zerkleinertem Holzmaterial verwendet werden.

Nach einer weiteren bevorzugten Ausführungsform wird dem Gemisch aus dem cellulosehaltigen Material und dem smektitischen Tonmineral noch eine geringe Menge mindestens eines hydrophilen Bindemittels, wie Stärke, Carboxymethylcellulose, Polyacrylate, Polyvinylalkohol oder Polyvinylpyrrolidon, insbesondere Guarkernmehl zugesetzt. Vorzugsweise liegt die zugesetzte Menge zwischen etwa 0,5 und 10 Gew.-%. Die Zugabe des hydrophilen Bindemittels hat eine positive Auswirkung auf die Eigenschaften der nach dem erfindungsgemäßen Verfahren hergestellten Sorptionsmittel, indem es die Bindung des Tonminerals an dem cellulosehaltigen Material noch verstärkt. Bei Anwesenheit eines Bindemittels kann der Anteil des cellulosehaltigen Materials an dem Sorptionsmittel noch gesteigert werden, ohne daß die vorstehend erwähnten vorteilhaften Eigenschaften verlorengehen. Somit ist ein geringeres Schüttgewicht möglich. Das Bindemittel erfüllt im Sorptionsmittel eine Doppelfunktion, indem es einerseits die Staubbildung vermindert und andererseits zu einer verbesserten Klumpenbildung führt.

Eine Optimierung der Streueigenschaften kann dadurch erreicht werden, daß die zerkleinerten und getrockneten Formkörper eine Größe von etwa 0,1 bis 10 mm, vorzugsweise von etwa 0,5 bis 4 mm haben, wobei der Anteil der Fraktion von etwa 0,5 bis 2 mm etwa 20 bis 35 Gew.-% und der Anteil der Fraktion von 2 bis 4 mm etwa 80 bis 65 Gew.-% beträgt. Die Größe der zerkleinerten und getrockneten Formkörper ist bei Verwendung einer Matrizenpresse zum einen durch die Größe der Öffnungen in der gelochten Bodenplatte bzw. im gelochten Außenzylinder und zum anderen durch die Länge der mit Hilfe des Abstreifers verteilten Formkörper gegeben. In diesem Fall ist ein Brechen der getrokkneten Formkörper nicht mehr erforderlich.

Gegenstand der Erfindung ist ferner ein Sorptionsmittel, das nach dem vorstehend beschriebenen Verfahren erhältlich ist und das bei Befeuchtung mit Flüssigkeiten Klumpen bildet, das durch eine Restfeuchte von etwa 5 bis 15, vorzugsweise von etwa 5 bis 10 Gew.-% und eine Wasseraufnahmefähigkeit von mindestens etwa 100 Gew.-%, vorzugsweise von mindestens etwa 120 Gew.-% (bezogen auf das bis auf eine Restfeuchte von 6 Gew.-% getrocknete Mittel) gekennzeichnet ist. Der bei Befeuchtung mit Flüssigkeiten (insbesondere mit wässrigen Flüssigkeiten) gebildete Klumpen ist kompakt und läßt sich mit einer Gitterschaufel (nachstehend erläutert) vollständig und ohne zu zerbrechen selektiv aus dem Sorptionsmittel herausnehmen. Die Härte und Festigkeit des Klumpens nehmen mit der Verweildauer und dem Trocknungsgrad zu. Das erfindungsgemäße Sorptionsmittel staubt nicht und weist hervorragende Absorptionseigenschaften auf.

Das erfindungsgemäße Sorptionsmittel hat gewöhnlich ein Schüttgewicht von etwa 300 bis 700 g/l, vorzugsweise von etwa 400 bis 600 g/l.

Das erfindungsgemäße Sorptionsmittel kann ferner mit an sich bekannten Sorptionsmitteln verschnitten werden. Weiterhin kann das Sorptionsmittel Weißpigmente, Desinfektionsmittel, Duftstoffe und/oder Tierakzeptanzien, sowie andere im Stand der Technik bekannte Hilfsstoffe enthalten.

Gegenstand der Erfindung ist ferner die Verwendung des vorstehend angegebenen Sorptionsmittels als Pakkungsmaterial, Aufsaugmittel für Flüssigkeiten, wie Körperflüssigkeiten (Urin, Blut, Sputum), Öl, flüssige Chemikalien sowie als Streumaterial für Heimtiere, insbesondere als Katzenstreu, beispielsweise in Katzentoiletten.

Die Eigenschaften des erfindungsgemäßen Sorptionsmittels werden im allgemeinen wie folgt bestimmt:

1. Wasseraufnahmefähigkeit

Nach einer Modifikation der Methode 17-A der Firma WESTINGHOUSE werden 20 g des körnigen Sorptionsmittels in ein gewogenes kegelförmiges Drahtsiebgewebe mit einem Durchmesser von 7 cm und einer Höhe von 7,6 cm eingewogen.

Das gefüllte Sieb wird dann in ein mit Wasser gefülltes Becherglas derart eingehängt, daß das Material vollständig mit Wasser bedeckt ist. Nach einer Saugzeit von 20 Minuten wird das Sieb weitere 20 Minuten in ein leeres Becherglas zum Abtropfen gehängt. Nach Beendigung der Tropfzeit wird das Sieb mit Inhalt erneut gewogen. Die Wasseraufnahmefähigkeit (%) entspricht der Gleichung 100 x E/D, wobei E die aufgesaugte Menge Wasser und D die Einwaage des körnigen Materials bedeutet.

## 2. Wassergehalt

Eine Granulatprobe wird im Trockenschrank bis zur Gewichtskonstanz getrocknet; aus der Gewichtsdifferenz vor und nach dem Trocknen wird der Gehalt an adsorbiertem Wasser bestimmt. Im einzelnen werden 10 bis 20 g Granulat in einer flachen Schale auf 0,01 g genau eingewogen und im Trockenschrank bei 100°C bis zur Gewichtskonstanz getrocknet (mindestens 2 Stunden). Anschließend läßt man die Probe im Exsikkator auf Raumtemperatur abkühlen und wiegt aus. Der Wassergehalt wird wie folgt berechnet:

$$\text{Wassergehalt (\%)} = \frac{\text{Einwaage-Auswaage}}{\text{Einwaage}} \times 100$$

In entsprechender Weise kann der Wassergehalt des cellulosehaltigen Materials bzw. des smektitischen Tonminerals (bei 100°C) bestimmt werden.

## 3. Absorptionstest

Auf eine eingeebnete und nicht verdichtete Schüttung des körnigen Sorptionsmittels in einer Glasschale (Durchmesser 140 mm, Höhe 75 mm, Füllhöhe 50 mm) wird Wasser aus einer 50 ml-Bürette gegeben und die Eindringtiefe beobachtet. Hierbei wird der Auslauf der Bürette in einer Höhe von 3 bis 4 cm in die Mitte der Schüttung gebracht, worauf 60 ml Leitungswasser innerhalb von 55 bis 60 Sekunden auslaufen gelassen werden. Nach einer Wartezeit von 3 Minuten wird an der Schalenunterseite geprüft, ob Wasser durch die Schicht gelaufen ist; das Durchlaufen ist an einer Verfärbung des körnigen Materials an der Schalenunterseite erkennbar. Die Auswertung wird wie folgt durchgeführt:

- Verfärbung am Schalenboden nicht sichtbar: Test bestanden;
- Verfärbung am Schalenboden sichtbar: Test nicht bestanden.

## 4. Klumpenbildung

Der beim Absorptionstest gebildete, im wesentlichen kegelförmige Klumpen, der im allgemeinen einen horizontalen Durchmesser von etwa 30 bis 50 mm und eine vertikale Abmessung von etwa 10 bis 50 mm hat, wird mit einer Gitterschaufel mit rautenförmigem Raster (Abmessungen der Schaufelfläche 80 x 120 mm; Maschenweite 11 x 11 mm, Stegbreite 0,3 mm) herausgenommen und nach folgenden Kriterien beurteilt:

Fester Klumpen

- der Klumpen läßt sich mit der Gitterschaufel <u>vollständig</u> entnehmen und bleibt während und nach der Herausnahme stabil;
- der Klumpen zeigt plastisches Verhalten und zerbricht erst bei stärkerem Druck zwischen den Fingern in größere Bruchstücke

Mäßig fester Klumpen:

- der Klumpen verformt sich während und nach der Herausnahme, läßt sich aber mit der Gitterschaufel vollständig entnehmen;
- der Klumpen zerfällt bei leichtem Druck zwischen den Fingern in kleinere Bruchstücke

## 5. Schüttgewicht

Ein 500 ml-Meßzylinder wird zunächst leer gewogen. Darauf wird ein Pulvertrichter mit einer Öffnung von etwa 15 cm und einer Auslaßöffnung von etwa 3 cm aufgesetzt und innerhalb von etwa 5 Sekunden mit dem Sorptionsmittel-Granulat gefüllt. Danach wird der Pulvertrichter vom Meßzylinder abgenommen, und zwar so, daß das darin befindliche Granulat einen überstehenden Kegel bildet. Dieser wird mit einem breiten Spatel entlang der Schnittkante des Meßzylinders abgestreift. Der gefüllte Meßzylinder wird außen von anhängenden Körnern oder Staub befreit und erneut gewogen. Das Schüttgewicht wird wie folgt berechnet:

$$\text{Schüttgewicht (g/l)} = 2 \times \text{Gewicht netto (g/500 ml)}$$

Die Erfindung ist durch die nachstehenden Beispiele erläutert:

Beispiel 1 (Vergleich)

Etwa 2 kg einer Mischung, bestehend aus 50 Gew.-% aufgemahlenem Holzmehl (etwa 10 Gew.-% Wasser, Partikelgröße etwa 0,5 mm), und 50 Gew.-% einer gemahlenen Mischung aus 20 Gew.-% Ca-Bentonit und 30 Gew.-% Na-Bentonit (Wasseraufnahmefähigkeit des Bentonitgemisches etwa 200 %) mit einem Wassergehalt von etwa 12,5 Gew.-% wird durch Zusatz von Wasser auf einen Feuchtigkeitsgehalt von 23,4 Gew.-% eingestellt. Das Holzmehl und die Bentonitmischung werden innig miteinander vermischt und in einer Flachmatrizenpresse der Firma Kahl (Typ 14-175) durch Preßformen verdichtet. Diese Flachmatrizenpresse ist im wesentlichen ein zylindrisches Gefäß mit einem Innendurchmesser von etwa 20 cm mit einer gelochten Bodenplatte (Lochdurchmesser 3mm), in welchem zwei um die Zylinderachse umlaufenden Walzen vorgesehen sind. Die Walzen üben auf die feuchte Mischung aus Holzmehl und Bentonitgemisch einen Preßdruck aus, wodurch die feuchte Mischung durch die gelochte Bodenplatte gepreßt wird. Der Energieeintrag beträgt etwa 6 kWh/to. Die durch die Lochplatte hindurchtretenden Formkörper werden durch eine unterhalb der Lochplatte angeordnete Schneidevorrichtung (Abstreifer) quer zu ihrer Längsachse in Stücke mit einer Länge von etwa 3 mm zerteilt. Bereits bei der Zerteilung treten auch kleinere Bruchstücke auf. Das erhaltene Granulat wird etwa 6 Stunden bei 80° C bis auf einen Restwassergehalt von 7,5 Gew.-% getrocknet, wobei es bereits bei einem geringen Druck zerbröselt. Das Granulat wird gesiebt, wobei der Feinanteil (< 0,5 mm) etwa 30% beträgt.
Die weiteren Eigenschaften des erhaltenen Granulats sind in der Tabelle angegeben.

Beispiel 2 (Vergleich)

Die Arbeitsweise von Beispiel 1 wurde mit der Abweichung wiederholt, daß der Wassergehalt der Holzmehl-Bentonit-Mischung auf 40,3 Gew.-% eingestellt wurde. Das Granulat wurde bis auf einen Restwassergehalt von 6,5 Gew.-% getrocknet. Nach dem Trocknen und Sieben betrug der Feinanteil (< 0,5 mm) weniger als 2 Gew.-%.
Die weiteren Eigenschaften des erhaltenen Granulats sind in der Tabelle angegeben.

Beispiel 3 (Erfindung)

Die Arbeitsweise von Beispiel 1 wurde mit der Abweichung wiederholt, daß der Wassergehalt der Holzmehl-Bentonit-Mischung vor dem Verdichten auf 30,2 Gew.-% eingestellt wurde. Nach dem Trocknen betrug der Restwassergehalt 4,5 Gew.-%.
Die weiteren Eigenschaften des erhaltenen Granulats sind in der Tabelle angegeben.

Beispiel 4 (Erfindung)

Die Arbeitsweise von Beispiel 3 wurde mit der Abweichung wiederholt, daß der feuchten Holzmehl-Bentonit-Mischung vor dem Verdichten 3 Gew.-% Guarkernmehl zugesetzt wurden. Der Wassergehalt vor dem Verdichten betrug 30,9 Gew.-%. Nach dem Trocken hatte das Granulat einen Restwassergehalt von 6,8 %.
Die weiteren Eigenschaften des erhaltenen Granulats sind in der Tabelle angegeben.

Beispiel 5 (Erfindung)

Die Arbeitsweise von Beispiel 3 wurde mit der Abweichung wiederholt, daß als cellulosehaltiges Material Cellulosefasern mit einer durchschnittlichen Faserlänge von 1 mm und einem Wassergehalt von 35 Gew.-% verwendet wurden. Dieses Material wurde innig mit der gleichen Menge der Bentonit-Mischung von Beispiel 1 (Wassergehalt 12,5 Gew.-%) im Verhältnis 1:1 vermischt, wobei Wasser zugesetzt wurde, so daß der Wassergehalt der Mischung vor dem Verdichten 34,0 Gew.-% betrug. Nach dem Trocknen hatte das Granulat einen Restwassergehalt von 5,8 %.
Die weiteren Eigenschaften des erhaltenen Granulats sind in der Tabelle angegeben.

## Tabelle

| Beispiel | Wassergehalt | | Schüttgewicht (g/Liter) | Wasseraufnahme-kapazität (Gew.-%) | Absorp-tionstest | Klumpen-bildung | Feinanteil (<0,5mm) Gew.-% |
|---|---|---|---|---|---|---|---|
| | vor dem Verdichten (Gew.-%) | nach dem Trocknen (Gew.-%) | | | | | |
| 1 (Vergl.) | 23,4 | 5,7 | 602 | 509 | bestanden | fest | 30 |
| 2 (Vergl.) | 40,3 | 6,5 | 481 | 319 | nicht bestanden | mäßig fest | <2 |
| 3 (Erf.) | 30,2 | 5,4 | 507 | 488 | bestanden | fest | 2 |
| 4 (Erf.) | 30,9 | 6,8 | 497 | 423 | bestanden | fest | 2 |
| 5 (Erf.) | 34,0 | 5,8 | 492 | 495 | bestanden | fest | 2 |

EP 0 961 542 B1

Die Tabelle zeigt einen sehr hohen Feinstoffanteil des Sorptionsmittels nach dem Vergleichsbeispiel 1, der durch den niedrigen Wassergehalt vor dem Verdichtens bedingt ist. Ansonsten bestand dieses Sorptionsmittel den Absorptionstest, und auch die Klumpenbildung war befriedigend.

Das Sorptionsmittel nach dem Vergleichsbeispiel 2 hatte aufgrund seines hohen Wassergehalts vor dem Verdichten eine geringe Wasseraufnahmekapazität; sein Feinanteil war relativ niedrig, aber es bestand den Absorptionstest nicht. Auch die Klumpen waren nur mäßig fest.

Die Sorptionsmittel nach den erfindungsgemäßen Beispielen 3 bis 5 mit einem Wassergehalt vor dem Verdichten im beanspruchten Bereich hatten einen sehr niedrigen Anteil an Feinanteilen und bestanden sowohl den Absorptionstest als auch den Klumpenbildungstest. Sie zeichneten sich auch durch eine hohe Wasseraufnahmekapazität aus.

Die Vergleichsbeispiele 1 und 2 zeigen ferner, daß die Verwendung einer Matrizenpresse allein micht ausreicht, um das Ziel der Erfindung zu erreichen, d.h., es kommt auf die Kombination dieses Merkmals mit dem Merkmal eines bestimmten Wassergehalts vor dem Verdichten an.

**Patentansprüche**

1. Verfahren zur Herstellung von Sorptionsmitteln auf der Basis von cellulosehaltigem Material und mindestens einem quellfähigen smektitischen Tonmineral, die bei Aufnahme von Flüssigkeiten Klumpen bilden, **dadurch gekennzeichnet, daß** man

   a) das cellulosehaltige Material und das smektitische Tonmineral in feinteiliger Form innig miteinander vermischt, wobei der Gesamtwassergehalt der zu vermischenden Bestandteile zwischen etwa 25 und 40 Gew.-% liegt oder durch Zugabe von Wasser auf diesen Bereich eingestellt wird,

   b) die Mischung unter Verwendung einer Matrizenpresse verdichtet; und

   c) die verdichteten, aus der Matrizenpresse austretenden Formkörper im wesentlichen quer zur Austrittsrichtung zertrennt und trocknet.

2. Verfahren nach Anspruch 1, **dadurch gekennzeichnet, daß** man die zerkleinerten und getrockneten Formkörper von Feinanteilen befreit und diese gegebenenfalls in die Mischstufe zurückleitet.

3. Verfahren nach Anspruch 1 oder 2, **dadurch gekennzeichnet, daß** der Wassergehalt der Mischung zwischen etwa 28 und 35 Gew.-% liegt.

4. Verfahren nach einem der Ansprüche 1 bis 3, **dadurch gekennzeichnet, daß** der Energieeintrag während des Preßformens zwischen etwa 3 und 9 kWh/to liegt.

5. Verfahren nach einem der Ansprüche 1 bis 4, **dadurch gekennzeichnet, daß** man von einem Ca- und/oder Na-Smektit mit einer Wasseraufnahmefähigkeit (bezogen auf den getrockneten Smektit mit einer Restfeuchte von 6 Gew.-%) von mindestens etwa 60 Gew.-%, vorzugsweise von mindestens etwa 120 Gew-% ausgeht.

6. Verfahren nach einem der Ansprüche 1 bis 5, **dadurch gekennzeichnet, daß** man als cellulosehaltiges Material einen feingemahlenen Zellstoff, einen Sekundärfasern enthaltenden Cellulose-Stoff, Holzmehl und/oder Holzschliff verwendet.

7. Verfahren nach einem der Ansprüche 1 bis 6, **dadurch gekennzeichnet, daß** man als cellulosehaltiges Material ein Cellulosefasern enthaltendes Material mit einer durchschnittlichen Faserlänge von etwa 0,1 bis 2 mm und einem Wassergehalt von etwa 30 bis 40 Gew.-% und/oder ein Holzmehl und/oder einen zerkleinerten Holzschliff enthaltenden Stoff mit einer durchschnittlichen Partikelgröße von 0,1 bis 2,0 mm und einem Wassergehalt von etwa 30 bis 40 Gew.-% verwendet.

8. Verfahren nach einem der Ansprüche 1 bis 7, **dadurch gekennzeichnet, daß** man die Gewichtsverhältnisse zwischen feinteiligem cellulosehaltigem Material einerseits und smektitischem Tonmineral andererseits auf etwa 1 : 9 bis 6,5 : 3,5, insbesondere auf etwa 3 : 7 bis 6 : 4 einstellt.

9. Verfahren nach einem der Ansprüche 1 bis 8, **dadurch gekennzeichnet, daß** man der Mischung etwa 1-10 Gew.-

% (bezogen auf die feuchte Mischung) eines hydrophilen Bindemittels, insbesondere Guarkernmehl, zusetzt.

10. Verfahren nach einem der Ansprüche 1 bis 9, **dadurch gekennzeichnet, daß** die zerkleinerten und getrockneten Formkörper eine Größe von etwa 0,1 bis 10 mm, vorzugsweise von etwa 0,5 bis 4 mm haben, wobei der Anteil der Fraktion von 0,5 bis 2 mm etwa 20 bis 35 Gew.-% und der Anteil der Fraktion von 2 bis 4 mm etwa 80 bis 65 Gew.-% beträgt.

11. Sorptionsmittel, das nach dem Verfahren nach einem der Ansprüche 1 bis 10 erhältlich ist, das bei Befeuchtung mit Flüssigkeiten Klumpen bildet und das durch eine Restfeuchte von etwa 5 bis 15, vorzugsweise von etwa 5 bis 10 Gew.-% und eine Wasseraufnahmefähigkeit von mindestens etwa 100 Gew.-%, vorzugsweise mindestens etwa 120 Gew.-% (bezogen auf das bis auf eine Restfeuchte von 6 Gew.-% getrocknete Mittel) **gekennzeichnet** ist.

12. Sorptionsmittel nach Anspruch 11, **gekennzeichnet durch** ein Schüttgewicht von etwa 300 bis 700 g/l, vorzugsweise von etwa 400 bis 600 g/l.

13. Sorptionsmittel nach Anspruch 11 oder 12, **dadurch gekennzeichnet, daß** es mit an sich bekannten Sorptionsmitteln verschnitten ist und weiterhin Weißpigmente, Desinfektionsmittel, Duftstoffe und/oder Tierakzeptanzien enthält.

14. Verwendung des Sorptionsmittels nach einem der Ansprüche 11 bis 13 als Packungsmaterial, Aufsaugmittel für Flüssigkeiten, wie Körperflüssigkeiten, Öl, flüssigen Chemikalien, sowie als Streumaterial für Heimtiere, insbesondere als Katzenstreu.

**Claims**

1. Method for producing sorbents on the basis of a cellulose containing material and at least one swellable smectitic clay mineral, which form clumps on absorption of liquids, characterized in that

    a) the cellulose-containing material and the smectitic clay mineral are intimately mixed in finely divided form, the total water contents of the components being mixed lying between about 25 and 40 wt% or being adjusted to this range by addition of water,

    b) the mixture is compacted using a die press; and

    c) the compacted shaped bodies emerging from the die press are cut essentially across the direction of emergence and dried.

2. Method according to Claims 1, **characterized in that** the ground and dried shaped bodies are freed of fine fractions which are optionally returned to the mixing stage.

3. Method according to Claims 1 or 2, **characterized in that** the water content of the mixture lies between about 28 and 35 wt%.

4. Method according to any one of Claims 1 to 3, characterized in that the energy input during compression molding is between about 3 and 9 kWh/t.

5. Method according to any one of Claims 1 to 4, characterized in that a Ca and/or Na smectite with a water absorption capacity (referred to the dried smectite with a residual moisture of 6 wt%) of at least about 60 wt%, preferably at least 120 wt%, is started with.

6. Method according to any one of Claims 1 to 5, characterized in that a finely ground pulp, a cellulose material containing secondary fibers, wood flour and/or wood chips are used as cellulose-containing material.

7. Method according to any one of Claims 1 to 6, characterized in that a material conaining cellulose fibers with an average fiber length of about 0,1 to 2mm and a water content of about 30 to 40 wt% and/or wood flour and/or a material containing ground wood chips with an average particle size of 0,1 to 2,0mm and a water content of about 30 to 40 wt% are used as cellulose-containing material.

8. Method according to any one of Claims 1 to 7, characterized in that the weight ratio between finely divided cellulose-con-taining material, on the one hand, and smectitic clay mineral, on the other hand, is set at about 1:9 to 6,5:3,5, especially about 3:7 to 6:4.

9. Method according to any one of Claims 1 to 8, characterized in that about 1-10 wt% (referred to the moist mixture) of a hydrophilic binder, especially guar flour is added to the mixture.

10. Method according to anyone of Claims 1 to 9, **characterized in that** the ground and dried shaped bodies have a size about 0,1 to 10 mm, preferably about 0,5 to 4 mm, in which the percentage of the fraction from 0,5 to 2 mm is about 20 to 35 wt% and the percentage of the fraction from 2 to 4 mm is about 80 to 65 wt%.

11. Sorbent, which can be obtained according to the method according to any one of Claims 1 to 10, which forms clumps when moistened with liquid and is **characterized by** a residual moisture content of 5 to 15, preferably about 5 to 10 wt%, and a water absorption capacity of at least about 100 wt%, preferably at least about 120 wt% (referred to the agent dried to a residual moisture content of 6 wt%).

12. Sorbent according to Claim 11, **characterized by** a bulk density of about 300 to 700g/L, preferably about 400 to 600 g/L.

13. Sorbent according to Claims 11 or 12, **characterized in that** it is mixed with known sorbents and also contains white pigments, disinfectants, fragrances and/or animal attractants.

14. Use of the sorbent according to any one of Claims 11 to 13 as a packing material, absorption agent for liquids, like body fluids, oil, liquid chemicals, as well as a litter material for domestic animals, especially as cat litter.

## Revendications

1. Procédé de fabrication d'agents de sorption à base d'un matériau cellulosique et d'au moins un minéral argileux de type smectite pouvant gonfler, qui après absorption de liquides forment des mottes, **caractérisé en ce que**

   a) on mélange intimement l'un à l'autre le matériau cellulosique et le minéral argileux de type smectite sous une forme finement divisée, la teneur totale en eau des constituants devant être mélangés étant comprise entre environ 25 et 40 % en poids et étant ajustée dans cette plage par addition d'eau,
   b) on comprime le mélange par utilisation d'une presse à matrice ; et
   c) on sépare pour l'essentiel perpendiculairement à leur direction de sortie les corps façonnés comprimés sortant de la presse à matrice, et on les sèche.

2. Procédé selon la revendication 1, **caractérisé en ce qu'**on débarrasse des fines les corps façonnés broyés et séchés, et éventuellement on les renvoie à l'étage de mélange.

3. Procédé selon la revendication 1 ou 2, **caractérisé en ce que** la teneur en eau du mélange est comprise entre environ 28 et 35 % en poids.

4. Procédé selon l'une des revendications 1 à 3, **caractérisé en ce que** l'apport d'énergie, pendant le formage à la presse, est compris entre environ 3 et 9 kWh/t.

5. Procédé selon l'une des revendications 1 à 4, **caractérisé en ce qu'**on part d'une smectite chargée au calcium et/ou au sodium, ayant un pouvoir d'absorption de l'eau (rapporté à la smectite séchée ayant une humidité résiduelle de 6 % en poids) d'au moins environ 60 % en poids, de préférence d'au moins environ 120 % en poids.

6. Procédé selon l'une des revendications 1 à 5, **caractérisé en ce qu'**on utilise en tant que matériau cellulosique une pâte finement broyée, une cellulose contenant des fibres secondaires, de la sciure et/ou de la pâte mécanique.

7. Procédé selon l'une des revendications 1 à 6, **caractérisé en ce qu'**on utilise en tant que matériau cellulosique un matériau contenant des fibres de cellulose, avec une longueur moyenne des fibres d'environ 0,1 à 2 mm et une teneur en eau d'environ 30 à 40 % en poids et/ou une sciure et/ou une substance contenant de la pâte mécanique broyée ayant une taille moyenne de particules de 0,1 à 2,0 mm et une teneur en eau d'environ 30 à 40 % en poids.

8. Procédé selon l'une des revendications 1 à 7, **caractérisé en ce qu'**on ajuste les rapports en poids entre le matériau cellulosique finement divisé d'une part et le minéral argileux de type smectite d'autre part, à environ 1:9 à 6,5:3,5, en particulier à environ 3:7 à 6:4.

9. Procédé selon l'une des revendications 1 à 8, **caractérisé en ce qu'**on ajoute au mélange environ 1 à 10 % en poids (par rapport au mélange humide) d'un liant hydrophile, en particulier de farine de guar.

10. Procédé selon l'une des revendications 1 à 9, **caractérisé en ce que** les corps façonnés broyés et séchés ont une taille d'environ 0,1 à 10 mm, de préférence d'environ 0,5 à 4 mm, la proportion de la fraction de 0,5 à 2 mm étant d'environ 20 à 35 % en poids et la proportion de la fraction de 2 à 4 mm étant d'environ 80 à 65 % en poids.

11. Agent de sorption pouvant être obtenu par le procédé selon l'une des revendications 1 à 10, qui après humidification par des liquides forme des mottes, et qui est **caractérisé par** une humidité résiduelle d'environ 5 à 15, de préférence d'environ 5 à 10 % en poids et par un pouvoir d'absorption de l'eau d'au moins environ 100 % en poids, de préférence d'au moins environ 120 % en poids (par rapport au produit séché jusqu'à une humidité résiduelle de 6 % en poids).

12. Agent de sorption selon la revendication 11, **caractérisé par** une masse volumique apparente d'environ 300 à 700 g/l, de préférence d'environ 400 à 600 g/l.

13. Agent de sorption selon la revendication 11 ou 12, **caractérisé en ce qu'**il est coupé par des sorbants connus en soi, et contient en outre des pigments blancs, des désinfectants, des substances odorantes et/ou des substances acceptées par les animaux.

14. Utilisation de l'agent de sorption selon l'une des revendications 1 à 13 comme matériau d'emballage, agent d'absorption de liquides tels que des fluides corporels, des huiles, des composés chimiques liquides, et en tant que litière pour animaux domestiques, en particulier comme litière pour chats.